# EUROPÄISCHE PATENTSCHRIFT

(11) **EP 1 886 796 B1**
(45) Veröffentlichungstag und Bekanntmachung des Hinweises auf die Patenterteilung: **23.12.2009**
(21) Anmeldenummer: 07113974.5
(22) Anmeldetag: 08.08.2007
(51) Int. Cl.: B29D 29/10, B66B 7/06, F16G 5/14

(54) **Aufzugriemen für eine Aufzuganlage und Aufzuganlage mit einem derartigen Riemen**
Belt for such a lift facility and lift facility with a such belt
Courroie sans fin pour une installation d'élévation et installation d'élévation dotée d'une telle courroie sans fin

(30) Priorität: 11.08.2006 EP 06118819
(43) Veröffentlichungstag der Anmeldung: 13.02.2008
(60) Teilanmeldung: 09175749.2
(73) Patentinhaber: Inventio AG, 6052 Hergiswil (CH)
(72) Erfinder: Ach, Ernst, 6030 Ebikon (CH)
(74) Vertreter: Gaussmann, Andreas

(56) Entgegenhaltungen:
- EP-A- 1 477 449
- EP-A- 1 547 960
- WO-A-03/001081
- DE-A1- 2 905 362
- DE-A1- 3 527 640
- DE-A1- 19 851 761
- DE-A1-102004 030 722
- DE-B- 1 141 443
- US-A1- 2002 108 814
- US-A1- 2003 121 729

## Beschreibung

Die vorliegende Erfindung betrifft einen Riemen für eine Aufzuganlage sowie eine Aufzuganlage mit einem solchen Riemen.

Eine Aufzugsanlage umfasst eine Aufzugskabine und in der Regel ein Gegengewicht, die in einem Aufzugsschacht oder entlang freistehender Führungseinrichtungen bewegbar sind. Zum Erzeugen der Bewegung weist die Aufzugsanlage mindestens eine Antriebseinheit mit mindestens je einer Treibscheibe auf, die über einen oder mehrere Riemen die Aufzugkabine und das Gegengewicht tragen und/oder die erforderlichen Antriebskräfte auf diese übertragen.

Dabei können die Aufzugkabine und das Gegengewicht über dieselben Riemen verbunden sein, die über die Treibscheibe(n) geführt sind und sowohl als Tragmittel als auch als Antriebsmittel wirken. Alternativ können die Aufzugkabine und das Gegengewicht auch über separate Tragriemen getragen und über separate Antriebsriemen angetrieben sein.

Ein Riemen nach der vorliegenden Erfindung kann für jede der oben beschriebenen Funktionen eingesetzt werden, also als kombinierter Antriebs- und Tragriemen, als Tragriemen, der über mindestens ein Umlenkrad (Tragrolle) läuft und die Aufzugkabine mit dem Gegengewicht verbindet und beide trägt, oder als Antriebsriemen, der ausschließlich Antriebsfunktion hat und über mindestens eine Treibscheibe läuft.

Solche Riemen für Aufzuganlagen umfassen üblicherweise einen Riemenkörper aus einem Elastomer. Um die Zugkräfte zu übertragen, sind in dem Riemenkörper Zugträger in Form von Stahl- und/oder Kunststoff-Corden eingebettet. Die Corde können beispielsweise als Litzen oder Seile aus Stahldrähten bzw. Kunststofffasern ausgebildet sein. Sie sind vorteilhaft in der neutralen Faser des Riemenquerschnitts angeordnet, in der beim Umschlingen einer Riemenscheibe keine Zug- oder Druckspannungen auftreten.

Aus DE 3527640 A1 wird ein Riemen, insbesondere ein Zahnriemen, zur Übertragung von Antriebskräften bekannt. Ein Verfahren zur Herstellung eines solchen Riemens umfasst zunächst die Herstellung eines Teilriemens mit in Längsrichtung liegenden Vertiefungen, in welche Zugträger eingebracht werden. Ein zweiter Teilriemen wird nun so auf den ersten Teilriemen mit den Zugtägern aufextrudiert, dass ein Riemen mit nebeneinanderliegenden Zugträgern entsteht.

In EP 1547960 A2 ist ein Riemen, insbesondere ein Keilrippenriemen, für ein Aufzugssystem offenbart. Der Riemen kann aus mehreren Schichten aufgebaut sein, wobei eine flächige Zugschicht die Funktion der Zugträger übernehmen kann. Diese Zugschicht erstreckt sich im Wesentlichen über die gesamte Riemenlänge und über die gesamte Riemenbreite.

Aus DE 1985 1761 A1 ist ein Keilriemen mit hoher Leistungsübertragung und geringer Längung bekannt, wie er in Motoren Anwendung findet.

Aus der EP 1 555 234 B1 ist eine gattungsgemäße Aufzuganlage bekannt, bei der der Riemen auf einer dem Treibrad zugewandten Traktionsseite eine Rippenanordnung mit mehreren sich in Längsrichtung des Riemens erstreckende keilförmige Rippen aufweist, die in entsprechende Rillen auf dem Treibrad eingreifen. Dadurch, dass der Kontakt zwischen dem Riemen und dem Treibrad über die schrägen Flanken der keilförmigen Rippen bzw. Rillen erfolgt, erhöhen sich bei gleicher Radialkraft und mithin gleicher Lagerbelastung und Riemenspannung die Anpresskräfte zwischen dem Riemen und dem Treibrad und damit die Traktions- bzw. Treibfähigkeit. Gleichzeitig führen die Keilrippen den Riemen vorteilhaft in Querrichtung auf dem Treibrad. Da die Riemen Zugträger mit relativ geringen Durchmessern enthalten, ist es möglich, Treibräder und Umlenkräder mit entsprechend kleinen Durchmessern einzusetzen. Beispielsweise kann auch die Abtriebswelle der Antriebseinheit selbst als Treibrad ausgebildet sein.

Im Folgenden wird daher einheitlich von Treibrädern gesprochen, die herkömmliche Treibscheiben mit größeren Durchmessern, aber auch Treibscheiben mit relativ kleinen Durchmessern und insbesondere auch Abtriebswellen einer Antriebseinheit einer Aufzuganlage umfassen. Wo sich im Folgenden Aussagen sowohl auf Treibräder als auch auf Umlenkräder beziehen, werden diese gemeinsam als Riemenräder bezeichnet.

Die Verwendung von Riemen mit dünnen Zugträgem und von Riemenrädern mit geringen Durchmessern hat hohe Flächenpressungen zwischen den einzelnen Zugträgern und dem sie umgebenden Riemenkörper, wie auch hohe Druck- und Schubspannungen im Riemenkörper selbst zur Folge. Die Flächenpressung und/oder die genannten Spannungen im Riemenkörper können Werte erreichen, bei denen die Gefahr einer Schädigung des Riemenkörpers gegeben ist.

Diese Gefahr ist umso größer, je kleiner die Durchmesser der Zugträger werden, da infolge der Verkleinerung der kraftübertragenden Oberfläche bei gleicher Riemenbelastung die Flächenpressung wie auch die durch die Zugträger verursachten Spannungen im Riemenkörper steigen. Zusätzlich verstärkt sich mit abnehmendem Zugträgerdurchmesser die Kerbwirkung auf den Riemenkörper, der - in Hinblick auf die erforderliche Reibung zwischen Riemen und Treibrad, auf die erforderliche Übertragung der Zugkräfte vom Riemenkörper auf die Zugträger und auf die gewünschte Dämpfung von Schwingungen bzw. die Absorption von Stößen im Riemen - üblicherweise aus einem relativ weichen Elastomer hergestellt und damit besonders anfällig gegenüber den genannten Belastungen ist.

Da die Umlenkung um Riemenräder und die Übertragung der Zugkraft von einem Treibrad auf die einzelnen Zugträger unter Schub- und/oder Zugverformung des Riemenkörpers stattfindet, kann es aufgrund der oben dargestellten Effekte zu einer Schädigungen des Riemenkörpers in Form von Abrasion und/oder Zerrüttung des die Zugträger umgebenden Elastomers und/oder einem Einschneiden von Zugträgern in den Elastomer kommen.

Diese Gefahr besteht auch bei Riemen nach dem Oberbegriff des Anspruchs 1, wie sie aus der US 7,037,578 B2 und DE 694 01 784 T2 bekannt sind. Auch dort sind die Zugträger in einer Matrix aus einem weichen Elastomer, insbesondere Polyurethan (PU), Polychloropren (CR) oder Ethylen-Propylen-Dien-Kautschuk (EPDM) eingebettet.

Somit können solche Riemen nicht oder nur bedingt in sicherheitssensiblen Vorrichtungen wie einer Aufzuganlage eingesetzt werden, da hier das Gefahrenpotential bei einem Riemenbruch aufgrund der oben beschriebenen Schädigungen zu hoch ist. Gleichermaßen können solche Riemen nicht zur Übertragung hoher Kräfte eingesetzt werden, da sich dabei die Gefahr solcher Schädigungen vergrößert.

Eine Aufgabe der vorliegenden Erfindung ist es daher, eine Aufzuganlage zu schaffen, bei der die Gefahr eines Versagens aufgrund eines Riemenbruches verringert ist. Eine weitere Aufgabe der vorliegenden Erfindung ist es, einen Riemen für eine solche Aufzuganlage zur Verfügung zu stellen, der auch höhere Kräfte übertragen kann. Eine weitere Aufgabe der vorliegenden Erfindung ist es, ein Verfahren zur Herstellung eines solchen Riemens anzugeben.

Zur Lösung dieser Aufgaben sind ein Riemen nach dem Oberbegriff des Anspruchs 1, sowie eine Aufzuganlage nach dem Oberbegriff des Anspruchs 10 durch deren kennzeichnende Merkmale weitergebildet.

Ein Riemen für eine Aufzuganlage nach einer Ausführung der vorliegenden Erfindung umfasst einen ersten Teilriemen aus einem ersten Material, in dem eine Zugträgeranordnung mit wenigstens einem Zugträger aus Stahldraht oder aus Stahldrahtlitzen bzw. Stahldrahtseilen angeordnet ist, und einen zweiten Teilriemen aus einem zweiten, vom ersten Material verschiedenen Material.

Erfindungsgemäß umfasst das erste Material wenigstens einen thermoplastischen Kunststoff. Bevorzugt handelt es sich bei diesem thermoplastischen Kunststoff um Polyamid (PA), Polyethylen (PE), Polycarbonat (PC) oder Polyvinylchlorid (PVC). Gleichermaßen kann das erste Material auch eine Mischung von zwei oder mehr thermoplastischen Kunststoffen, ein so genanntes Polyblend umfassen. Zur Verstärkung kann das erste Material auch Zusatzstoffe, insbesondere Fasern wie beispielsweise Kohle- oder Glasfasern enthalten. Gleichermaßen kann das erste Material ein Gewebe aus einem thermoplastischen Kunststoff umfassen.

Durch die Anordnung der Zugträgeranordnung im ersten Teilriemen aus einem ersten thermoplastischen Material nimmt dieses hierfür besonders geeignete erste Material die normal und tangential zur Oberfläche der Zugträger wirkenden Kräfte auf und überträgt diese, im Wesentlichen über die gesamte Verbindungsfläche verteilt, auf den zweiten Teilriemen. Damit erhöht sich die Fläche, über die die Kräfte aus den Zugträgern in den zweiten Teilriemen eingeleitet werden, so dass sich die auf diesen wirkenden Spannungen, insbesondere Druck- und Schubspannungen verringern. Zugleich verringert sich die Kerbwirkung auf den zweiten Teilriemen.

Vorteilhafterweise wird es damit möglich, das zweite Material des zweiten Teilriemens in Hinblick auf dessen Funktion, insbesondere den reibschlüssigen Kontakt mit einem Treibrad, die Dämpfung von Schwingungen und Stößen und/oder die zur Umschlingung von Riemenrädern erforderliche Elastizität zu wählen. Gleichzeitig können die von den Zugträgern zu übertragenden Kräfte und damit die zulässige Riemenbelastung erhöht werden, da die von den Zugträgern in dem Riemen erzeugten Flächenpressungen und Spannungen zunächst von dem ersten Teilriemen aufgenommen werden, dessen erstes Material in Hinblick auf die vorliegende Beanspruchung geeignet gewählt werden kann. Im ersten Teilriemen verteilen sich die von den Zugträgern auf den Riemenkörper übertragenen Belastungen, so dass die auf den zweiten Teilriemen an dessen Verbindungsfläche zum ersten Teilriemen einwirkenden maximalen Flächenpressungen und Druckspannungen nur noch reduziert auftreten.

Vorzugsweise wird der erste Teilriemen verhältnismäßig dünn ausgebildet, so dass er trotz seiner höheren Härte die Biegeelastizität des Riemens nicht wesentlich beeinträchtigt. Vorteilhafterweise beträgt dementsprechend die Dicke des ersten Teilriemens höchstens 60%, bevorzugt höchstens 40 % und besonders bevorzugt höchstens 30 % der Gesamtdicke des Riemens.

Um zu gewährleisten, dass das erste Material, aus dem der erste Teilriemen besteht, die aus der Belastung der Zugträger resultierenden relativ hohen lokalen Flächenpressungen, Druck- und Schubspannungen langfristig erträgt, weist das erste Material vorzugsweise die folgenden Materialkennwerte (bei Raumtemperatur) auf:
- Mindest-Streckspannung nach DIN 53455 bzw. ISO 527: 45 N/mm²
- Mindest-Reißdehnung nach DIN 53455 bzw. ISO 527: 45 %.
- Mindest-Kugeldruckhärte nach DIN 53456 bzw. ISO 2039 (H358/30s): 30 N/mm²
   bevorzugt: 50 N/mm²
   besonders bevorzugt: 70 N/mm² In Materialien mit diesen Kennwerten schneiden die Zugträger auch unter hoher Belastung nicht oder nur wenig ein. Sie ertragen auch die auftretenden Druck- und/oder Schubspannungen, ohne unzulässig hohe Deformationen, Abrasion oder Zerrüttung zu zeigen.

Vorzugsweise ist auch der Reibwert des ersten Materials, das auch den der Traktionsfläche abgewandten Riemenrücken bildet, relativ gering. Dadurch verringert sich beim Umschlingen von Umlenkrädern ohne Längsrillen die zwischen den Umlenkrädern und dem Riemen auftretende Reibkraft, die zum seitlichen Führen des Riemens auf dem Umlenkrad zu überwinden ist. In der Folge werden die schädliche seitliche Reibbelastung des Riemens - beispielsweise durch Führungsbordscheiben der Umlenkräder - und damit auch die erforderliche Antriebsleistung der Aufzugsanlage reduziert und die Lebensdauer des Riemens erhöht.

In einer vorteilhaften Ausführung kann ein Riemen nach der vorliegenden Erfindung hierzu eine Beschichtung der Riemenrückseite aus einem Material aufweisen, das einen niedrigeren Reibwert und/oder eine höhere Abriebfestigkeit als das erste Material aufweist.

Die Zugträgeranordnung umfasst wenigstens einen, bevorzugt jedoch mehrere, im Wesentlichen parallele Zugträger, die insbesondere in Längsrichtung des Riemens angeordnet sein können. Die erfindungsgemäße Anordnung der Zugträger in dem stabilen ersten Teilriemen erleichtert deren lagerichtige Anordnung während des Herstellungsvorgangs, da die Zugträger beim Aufbringen des zweiten Materials bereits im ersten Material fixiert sind. Die Zugträger können als Einfachdraht ausgebildet oder, bevorzugt, aus Litzen oder Seilen aufgebaut sein, wobei die Litzen oder Seile aus Stahldrähten hergestellt sind. In einer besonders bevorzugten Ausführung sind die Zugträger der Zugträgeranordnung in oder in der Nähe der neutralen Faser des gesamten Riemens angeordnet, in der bei der Umlenkung um ein Riemenrad, insbesondere ein Treibrad, keine Zug- oder Druckspannungen auftreten.

Vorzugsweise ist der zweite Teilriemen des Riemens zum Zusammenwirken mit einem Treibrad der Aufzuganlage vorgesehen. In einer vorteilhaften Ausführung weist er hierzu eine Traktionsfläche auf, in der wenigstens eine Keilrippe ausgebildet ist, die in eine korrespondierende, im Wesentlichen komplementäre Rille in der Lauffläche des Treibrades eingreift. Zur Erhöhung der Traktionsfähigkeit bzw. zur Verbesserung der seitlichen Führung des Riemens auf den Riemenrädern können bevorzugt mehrere Keilrippen nebeneinander ausgebildet sein. Diese müssen nicht zwingend miteinander verbunden sein. Getrennte, auf dem ersten Teilriemen angeordnete Keilrippen des zweiten Teilriemen können Lageabweichungen der einzelnen Rillen eines Treibrades zueinander vorteilhaft ausgleichen. Andererseits vergrößert ein wenigstens dünner Verbindungssteg, der sich zwischen benachbarten Rippen auf der Verbindungsfläche zum ersten Teilriemen erstreckt, vorteilhaft diese Verbindungsfläche und damit die Festigkeit der Verbindung zwischen dem ersten und dem zweiten Teilriemen.

In einer vorteilhaften Ausführung weist eine Keilrippe einen im Wesentlichen trapezförmigen Querschnitt mit einem zwischen ihren beiden Flanken gemessenen Flankenwinkel von 60° bis 120° auf. Es sind auch andere Querschnittsformen, beispielsweise dreieckige Querschnitte, möglich.

In einer vorteilhaften Ausführung weist die Traktionsfläche des Riemens eine Beschichtung auf, die mit der Lauffläche eines Treibrades der Aufzuganlage einen definierten Reibwert aufweist. Dieser Reibwert kann höher als derjenige des zweiten Materials sein, um beispielsweise die Traktionsfähigkeit zu verbessern. Alternativ kann er auch niedriger als derjenige des zweiten Materials sein. Dies reduziert einerseits den Verschleiß an der Traktionsfläche und kann insbesondere bei einer Traktionsfläche, auf der eine oder mehrere Keilrippen ausgebildet sind, die Gefahr eines Verklemmens der Keilrippen in den Rillen eines Riemenrades eliminieren.

Das zweite Material für den zweiten Teilriemen umfasst bevorzugt ein Elastomer, insbesondere Polyurethan, Polychloropren oder Ethylen-Propylen-Dien-Kautschuk oder eine Mischung aus zwei oder mehreren Elastomeren. Ein derartiger elastomerer zweiter Teilriemen ist ausreichend flexibel zur Umschlingung von Riemenrädern mit geringen Durchmessern. Gleichzeitig dämpft ein solches zweites Material in bekannter Weise vorteilhaft Schwingungen und Stöße im Riemen. Zugleich erträgt es beim Zusammenwirken mit einer Lauffläche eines Treibrades die zur Übertragung der Zugkräfte in den Riemen auftretende Schubverformung aufgrund seiner elastischen Eigenschaften.

Somit kann für den zweiten Teilriemen ein relativ weiches zweites Material gewählt werden, dessen Härte bei Raumtemperatur vorteilhaft weniger als 95 Shore (A), bevorzugt weniger als 90 Shore (A) und besonders bevorzugt weniger als 85 Shore (A) beträgt, da erfindungsgemäß die hohen lokalen Flächenpressungen der einzelnen Zugträger vom ersten, härteren Material aufgenommen und als homogenere und geringere Flächenpressung über die Verbindungsfläche auf das zweite Material übertragen werden.

Ein Riemen nach einer Ausführung der vorliegenden Erfindung wird bevorzugt in den folgenden Schritten hergestellt. Zunächst wird der erste Teilriemen aus dem ersten Material hergestellt. Vorteilhaft geschieht dies durch Extrudieren des thermoplastischen Kunststoffes, was eine gleichmäßige, kostengünstige und endlose Herstellung ermöglicht.

Bereits beim Urformen (Extrusionsvorgang) des ersten Teilriemens können die Zugträger im ersten Teilriemen angeordnet werden, wozu die einzelnen Zugträger während des Extrusionsvorganges dem entstehenden ersten Teilriemen derart zugeführt werden, dass sie mindestens auf der dem zweiten Teilriemen zugewandten Seite vollständig von dem ersten Material umhüllt sind.

Bevorzugt sind die Zugträger vollständig von erstem Material umhüllt. Zur Lösung der erfindungsgemäßen Aufgabe ist es jedoch ausreichend, wenn die dem zweiten Teilriemen zugewandte Seite der Zugträger von diesem durch das erste Material getrennt ist. In einer weiteren Ausführungsform der vorliegenden Erfindung können daher zunächst der erste Teilriemen hergestellt und anschließend die einzelnen Zugträger auf dessen der Verbindungsfläche zum zweiten Teilriemen abgewandten Seite angeordnet werden. Hierzu kann der erste Teilriemen auf dieser abgewandten Seite vorteilhaft Rillen zur lagerichtigen Positionierung der Zugträger aufweisen. Die Fixierung der Zugträger in den Rillen des ersten Teilriemen kann dabei mittels thermischer Nachbehandlung des thermoplastischen Materials oder durch Zugabe eines Klebstoffs erfolgen. Die Zugträger, die im Bereich der dem zweiten Teilriemen abgewandten Seite des ersten Teilriemens angeordnet sind, können aber auch am zweiten Teilriemen durch einen dritten Teilriemen fixiert werden, der mit der genannten Seite des ersten Teilriemens, beispielsweise durch Kleben und/oder Aufextrudieren, derart verbunden wird, dass die Zugträger zwischen erstem und drittem Teilriemen fixiert sind.

In einem weiteren Schritt wird der zweiten Teilriemen aus dem zweiten Material hergestellt und mit dem ersten Teilriemen fest verbunden. Dies kann bevorzugt durch Aufextrudieren des zweiten auf den ersten Teilriemen erfolgen. Dabei können vorteilhafterweise auch die Keilrippen der Traktionsfläche des zweiten Teilriemens ausgebildet werden.

Gleichermaßen kann der zweite Teilriemen auch mit dem ersten Teilriemen verklebt werden. In einer besonders bevorzugten Ausführung enthält das zweite Material hierzu einen Klebstoff, der beim Aufextrudieren auf den ersten Teilriemen durch thermisches Verkleben eine feste Verbindung zu diesem schafft.

Die vorteilhafte Beschichtung der Traktionsfläche des zweiten Teilriemens kann während seiner Herstellung oder im Anschluss daran aufgebracht werden. So kann ein Kunstfasergewebe, eine Schicht aus einem anderen Elastomer, eine Beflockungsschicht und/oder eine Thermoplastschicht, die beispielsweise Polyamid enthält, während des Extrudierens des zweiten Teilriemens auf seiner Traktionsfläche angeordnet werden, wobei sich die Beschichtung vorteilhaft fest mit dem noch formbaren zweiten Material verbindet.

Eine Aufzuganlage nach der vorliegenden Erfindung umfasst eine Aufzugkabine, eine Antriebseinheit mit wenigstens einem Treibrad und einer Riemenanordnung mit wenigstens einem Riemen nach einer Ausführung der vorliegenden Erfindung. Vorteilhaft kann die Riemenanordnung auch mehrere Riemen nach einer oder verschiedenen Ausführungen der vorliegenden Erfindung umfassen, die, beispielsweise formschlüssig, fest oder lösbar miteinander verbunden sein können. Dies ermöglicht es, eine relativ breite Riemenanordnung aus mehreren schmalen, leichter zu handhabenden Riemen vor Ort zusammenzusetzen. Das oder die Treibräder weisen in einer bevorzugten Ausführung ein im Wesentlichen zur Traktionsfläche des zweiten Riemens komplementäres Keilrippenprofil auf.

Weitere Aufgaben, Merkmale und Vorteile ergeben sich aus den Unteransprüchen und den nachfolgend beschriebenen Ausführungsbeispiele. Hierzu zeigt:
- Fig. 1: einen Querschnitt durch einen Riemen nach einer Ausführung der vorliegenden Erfindung; und
- Fig. 2: einen zu einer Aufzugskabinenfront parallelen Schnitt durch eine Aufzugsanlage nach einer Ausführung der vorliegenden Erfindung.

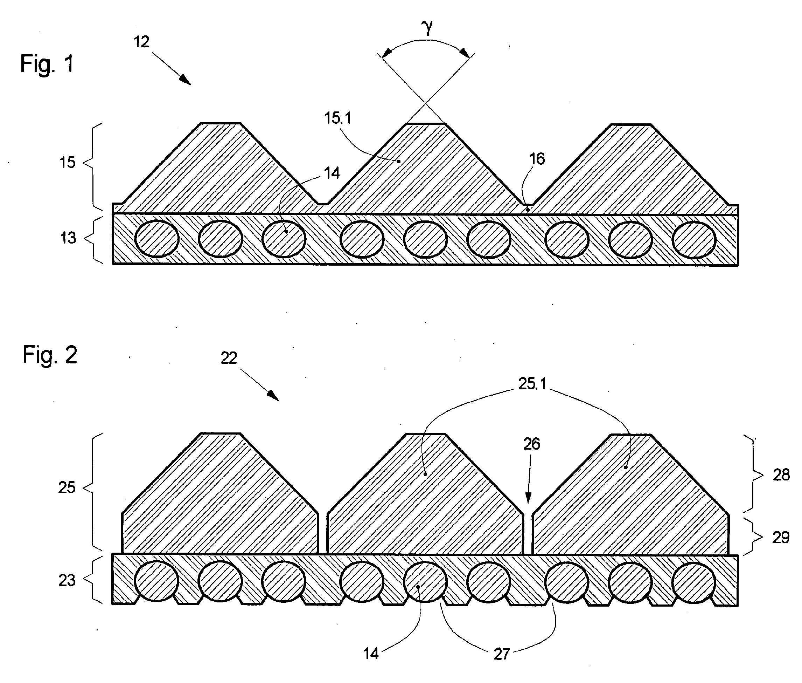

Fig. 1 zeigt einen Querschnitt durch einen Riemen 12 nach einer Ausführung der vorliegenden Erfindung. Dieser umfasst einen ersten Teilriemen 13 aus einem thermoplastischen Kunststoff, im Ausführungsbeispiel Polyamid. Der erste Teilriemen 13 wird durch Extrusion hergestellt, wobei ihm bei seiner Herstellung Zugträger 14 aus mehrfach verseilten Stahldrähten derart zugeführt werden, dass diese im fertigen ersten Teilriemen 13 vollständig eingeschlossen und fixiert sind. Anschließend wird ein zweiter Teilriemen 15 aus einem Elastomer, im Ausführungsbeispiel Polyurethan, auf den ersten Teilriemen 13 aufextrudiert. Dabei wird die dem ersten Teilriemen abgewandte Seite des zweiten Teilriemens 15 als Traktionsfläche ausgebildet, die zum Zusammenwirken mit einem Treibrad 4.1 (s. Fig. 2) vorgesehen ist, das auf seiner Lauffläche ein Keilrippenprofil aufweist. Hierzu weist die Traktionsfläche des zweiten Teilriemens 15 Keilrippen 15.1 auf, deren Flanken einen Winkel γ von 90° einschließen. Die Keilrippen 15.1 sind durch relativ dünne Verbindungsstege 16, die sich zwischen benachbarten Rippen auf der Verbindungsfläche zwischen den beiden Teilriemen erstrecken, miteinander verbunden, wodurch die Festigkeit der Verbindung zwischen den beiden Teilriemen erhöht wird.

In einer nicht dargestellten Ausführung ist die Traktionsfläche mit einer dünnen Beschichtung aus Polyamid versehen, um den Reibwert zu senken. Aufgrund der Keilrippen 15.1 ergibt sich trotzdem eine ausreichende Traktionsfähigkeit, wobei die Polyamid-Beschichtung vorteilhaft den Verschleiß der Traktionsfläche vermindert und die Gefahr eines Verklemmens des Riemens 12 in dem Treibrad 4.1 reduziert.

Die Größenverhältnisse zwischen erstem und zweitem Teilriemen und den Zugträgern sind in Fig. 1 zur Verdeutlichung der einzelnen Elemente nicht maßstabsgerecht dargestellt. Vielmehr ist der erste Teilriemen 13 real dünner als der zweite Teilriemen 15 und weist eine Dicke auf, die gerade ausreicht, die Zugträger 14 vollständig zu umschließen und die von diesen eingeleiteten Spannungen möglichst homogen auf den zweiten Teilriemen zu übertragen. Damit ist der aus dem dickeren, jedoch elastischeren zweiten Teilriemen 15 und dem weniger elastischen, jedoch dünneren ersten Teilriemen 13 bestehende Riemen 12 insgesamt ausreichend elastisch, um die Riemenräder 4.1, 4.2 und 4.3 (s. Fig. 2) geschmeidig zu umschlingen.

Fig. 2 zeigt einen Querschnitt durch einen Riemen 22 nach einer weiteren Ausführungsform der vorliegenden Erfindung. Dieser umfasst ebenfalls einen ersten Teilriemen 23 aus einem thermoplastischen Kunststoff und einen zweiten Teilriemen 25 aus einem Elastomer, der auf den ersten Teilriemen 13 aufextrudiert ist und eine Traktionsfläche mit mehreren Keilrippen 25.1 bildet. Im Unterschied zum in Fig. 1 beschriebenen Riemen 12 weisen bei dem in Fig. 2 dargestellten Riemen 22 die Keilrippen zwischen ihren trapez- oder keilförmigen Kontaktabschnitten 28 und dem ersten Teilriemen 23 einen im Wesentlichen rechteckförmigen Sockelabschnitt 29 auf, der mindestens 20 % der Höhe des gesamten zweiten Teilriemens 25 umfasst. Die Keilrippen 25.1, d. h. ihre Sockelabschnitte 29, sind durch Zwischenräume 26 vollständig voneinander separiert. Eine solche Ausführungsform hat den Vorteil, dass die trapez- oder keilförmigen Kontaktabschnitte 28 der Keilrippen 25.1 relativ zueinander quer zur Längsrichtung des Riemens 22 elastisch verschiebbar sind, so dass sich die Keilrippenanordnung insgesamt elastisch an das vorhandene Keilrillenprofil eines korrespondierenden Riemenrades anpassen kann, bei welchem die Form und/oder die gegenseitigen Abstände der Keilrippen innerhalb von zulässigen Grenzen von der Form bzw. den Abständen der Keilrippen des Riemens abweichen. Diese Ausführungsform hat Vorteile in Bezug auf die Traktionsfähigkeit zwischen einem Treibrad und dem Riemen, auf die Lebensdauer des Riemens und der Riemenräder sowie auf die Geräuschentwicklung des gesamten Riementriebs.

In Fig. 2 ist außerdem eine Ausführungsform des Riemens 22 gezeigt, bei der die Zugträger 14 in Rillen 27 des ersten Teilriemens 23 eingelegt sind, wie dies bereits vorstehend bereits beschrieben ist. Die Rillen 27 sind in der dargestellten Ausführungsform nach dem Einlegen der Zugträger 14 so thermisch verformt worden, dass die Zugträger im ersten Teilriemen stabil fixiert sind.

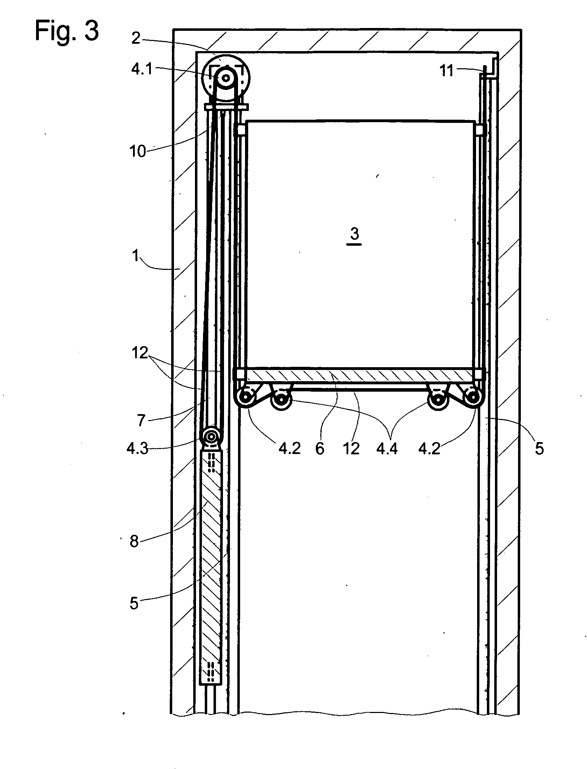

Fig. 3 zeigt schematisch einen Schnitt durch ein in einem Aufzugsschacht 1 installiertes Aufzugssystem mit dem Riemen 12. Das Aufzugssystem umfasst eine in einem Aufzugsschacht 1 fixierte Antriebseinheit 2 mit einem Treibrad 4.1, eine an Kabinenführungsschienen 5 geführte Aufzugskabine 3 mit unterhalb des Kabinenbodens 6 angebrachten Umlenkrädern in Form von Kabinentragrollen 4.2, ein an Gegengewichtsführungsschienen 7 geführtes Gegengewicht 8 mit einem weiteren Umlenkrad in Form einer Gegengewichtstragrolle 4.3, und den Riemen 12 für die Aufzugskabine 3 und das Gegengewicht 8, der die Antriebskraft von dem Treibrad 4.1 der Antriebseinheit 2 auf die Aufzugskabine und das Gegengewicht überträgt.

Der Riemen 12 ist an einem seiner Enden unterhalb des Treibrades 4.1 an einem ersten Riemenfixpunkt 10 befestigt. Von diesem aus erstreckt er sich abwärts bis zu der Gegengewichtstragrolle 4.3, umschlingt diese und erstreckt sich von dieser aus zum Treibrad 4.1, umschlingt diese und verläuft entlang der gegengewichtsseitigen Kabinenwand abwärts, umschlingt auf beiden Seiten der Aufzugskabine je eine unterhalb der Aufzugskabine 3 angebrachte Kabinentragrolle 4.2 um je 90° und verläuft entlang der dem Gegengewicht 8 abgewandten Kabinenwand aufwärts zu einem zweiten Riemenfixpunkt 11.

Die Ebene des Treibrades 4.1 kann rechtwinklig zur gegengewichtsseitigen Kabinenwand angeordnet sein und ihre Vertikalprojektion kann außerhalb der Vertikalprojektion der Aufzugskabine 3 liegen. Es ist daher zu bevorzugen, dass das Treibrad 4.1 einen geringen Durchmesser aufweist, damit der Abstand zwischen der linksseitigen Kabinenwand und der dieser gegenüber liegenden Wand des Aufzugsschachts 1 möglichst klein sein kann. Außerdem ermöglicht ein geringer Treibraddurchmesser die Verwendung eines getriebelosen Antriebsmotors mit relativ geringem Antriebsdrehmoment als Antriebseinheit 2.

Das Treibrad 4.1 und die Gegengewichtstragrolle 4.3 sind an ihrer Peripherie mit Rillen versehen, die im Wesentlichen komplementär zu den Rippen 15.1 des Riemens 12 geformt sind. Wo der Riemen 12 eines der Riemenräder 4.1 oder 4.3 umschlingt, liegen die auf seiner Traktionsfläche vorhandenen Rippen in korrespondierenden Rillen des Riemenrades, wodurch eine ausgezeichnete Führung des Riemens auf diesen Riemenrädern gewährleistet ist. Außerdem wird durch die zwischen den Rillen des als Treibrad dienenden Riemenrades 4.1 und den Rippen des Riemens 12 entstehende Keilwirkung die Traktionsfähigkeit verbessert.

In einer nicht dargestellten weiteren Ausführungsform weisen auch die Gleitfläche des Riemens 12 und die Kabinentragrollen 4.2 korrespondierende Keilrippen auf. Hierzu ist bei der nicht dargestellten weiteren Ausführungsform auf der dem zweiten Teilriemen 15 abgewandten Seite des ersten Teilriemens 13 ein dritter Teilriemen aus Polyurethan angeordnet, der wie der zweite Teilriemen Keilrippen aufweist. Bei der Umschlingung der Kabinentragrollen 4.2 unterhalb der Aufzugskabine 3 ist daher im Gegensatz zu herkömmlichen Aufzuganlagen auch eine seitliche Führung zwischen den Kabinentragrollen 4.2 und dem Riemen 12 gegeben, da der Riemen auch Rippen auf seiner den Kabinentragrollen 4.2 zugewandten Seite aufweist. Um die Seitenführung des Riemens noch weiter zu verbessern, sind am Kabinenboden 6 zwei mit Rillen versehene Führungsrollen 4.4 angebracht, deren Rillen mit den Rippen des Riemens 12 als Seitenführung zusammenwirken.

## Patentansprüche

1. Riemen (12; 22) für eine Aufzuganlage, der umfasst:
- einen ersten Teilriemen (13) aus einem ersten Material; wobei das erste Material ein thermoplastischer Kunststoff ist oder einen thermoplastischen Kunststoff enthät und wobei das erste Material bei Raumtemperatur eine Mindest-Reißdehnung nach DIN 53455 bzw. ISO 527 von 45 % aufweist;
- eine Zugträgeranordnung mit wenigstens einem Zugträger (14), die in dem ersten Teilriemen angeordnet ist, wobei der Zugträger (14) aus einem einfachen Stahldraht oder aus einer Stahldrahtlitze bzw. einem Stahldrahtseil besteht; und
- einen zweiten Teilriemen (15; 25) aus einem zweiten Material, wobei das zweite Material bei Raumtemperatur eine Härte von weniger als 95 Shore (A), bevorzugt von weniger als 90 Shore (A) und besonders bevorzugt eine Härte von weniger als 85 Shore (A) aufweist.

2. Riemen (12; 22) nach Anspruch 1, wobei das erste Material aus einer der folgenden Materialgruppen ausgewählt ist:
- Polyamid (PA), Polyethylen (PE), Polycarbonat (PC), Polyvinylchlorid (PVC), oder
- Polyblend, das eines der oben genannten Materialien enthält, oder
- Gewebe aus einem der genannten Materialien.

3. Riemen (12; 22) nach Anspruch 1 oder 2, wobei das erste Material bei Raumtemperatur eine Mindest-Streckspannung nach DIN 53455 bzw. ISO 527 von 45 N/mm² aufweist.

4. Riemen (12; 22) nach einem der vorhergehenden Ansprüche, wobei das erste Material bei Raumtemperatur eine Mindest-Kugeldruckhärte nach DIN 53456 bzw. ISO 2039 (H358/30s) von 30 N/mm², bevorzugt von 50 N/mm², besonders bevorzugt von 70 N/mm² aufweist.

5. Riemen (12; 22) nach einem der vorhergehenden Ansprüche, wobei die Dicke des ersten Teilriemens (13; 23) höchstens 60 %, bevorzugt höchstens 40 % und besonders bevorzugt höchstens 30 % der Gesamtdicke des Riemens beträgt.

6. Riemen (12; 22) nach einem der vorhergehenden Ansprüche, wobei der zweite Teilriemen (15; 25) eine Traktionsfläche zum Zusammenwirken mit einem Treibrad der Aufzuganlage aufweist, in der wenigstens eine Keilrippe (15.1; 25.1) ausgebildet ist.

7. Riemen (12; 22) nach einem der vorhergehenden Ansprüche, wobei die Traktionsfläche des zweiten Teilriemens (15) zum Zusammenwirken mit einem Treibrad (4.1) der Aufzuganlage eine Beschichtung aufweiset, die gegenüber der Lauffläche des Treibrades (4.1) einen definierten Reibwert, insbesondere einen höheren oder niedrigeren Reibwert als das zweite Material, aufweist.

8. Riemen (12; 22) nach einem der vorhergehenden Ansprüche, wobei das zweite Material ein Elastomer, insbesondere Polyurethan (PU), Polychloropren (CR) und/oder Ethylen-Propylen-Dien-Kautschuk (EPDM), umfasst.

9. Riemen (22) nach einem der vorhergehenden Ansprüche, wobei
- mindestens zwei Keilrippen (25.1) je einen trapez- oder keilförmigen Kontaktabschnitt (28) und einen im Wesentlichen rechteckförmigen Sockelabschnitt (29) aufweisen,
- die rechteckförpnigen Sockelabschnitte (29) zwischen den Kontaktabschnitten (28) und dem ersten Teilriemen (23) angeordnet sind und mindestens 20 % der Höhle des zweiten Teilriemens 25 umfassen und
- die Sockelabschnitte (29), durch Zwischenräume (26) vollständig voneinander separiert sind.

10. Aufzuganlage mit einer Aufzugkabine (3), einer Antriebseinheit (2) mit einem Treibrad (4.1) und einer Riemenanordnung mit wenigstens einem Riemen (12; 22) nach einem der Ansprüche 1 bis 9.

## Claims

1. Belt (12; 22) for a lift installation, which comprises:
- a first part belt (13) of a first material, wherein the first material is a thermoplastic plastics material or contains a thermoplastic plastics material and wherein the first material has at room temperature a minimum elongation at tear according to DIN 53455 or ISO 527 of 45%;
- a tensile carrier arrangement with at least one tensile carrier (14), which is arranged in the first part belt, wherein the tensile carrier (14) consists of a single steel wire or of a steel wire strand or a steel wire cable; and
- a second part belt (15; 25) of a second material, wherein the second material has at room temperature a hardness of less than 95 Shore (A), preferably of less than 90 Shore (A) and particularly preferably a hardness of less than 85 Shore (A).

2. Belt (12; 22) according to claim 1, wherein the first material is selected from one of the following material groups;
- polyamide (PA), polyethylene (PE), polycarbonate (PC), polyvinylchloride (PVC) or
- polyblend, which contains one of the above-mentioned materials or
- fabric consisting of one of the said materials.

3. Belt (12; 22) according to claim 1 or 2, wherein the first material has at room temperature a minimum yield stress according to DIN 53455 or ISO 527 of 45 N/mm².

4. Belt (12; 22) according to any one of the preceding claims, wherein the first material has at room temperature a minimum indentation hardness according to DIN 53456 or ISO 2039 (H358/30s) of 30 N/mm², preferably 50 N/mm², particularly preferably of 70 N/mm².

5. Belt (12; 22) according to any one of the preceding claims, wherein the thickness of the first part belt (13; 23) is at most 60%, preferably at most 40% and particularly preferably at most 30% of the total thickness of the belt.

6. Belt (12; 22) according to any one of the preceding claims, wherein the second part belt (15; 25) has a traction surface for co-operation with a drive wheel of the lift installation, in which at least one wedge rib (15.1; 25.1) is formed.

7. Belt (12; 22) according to any one of the preceding claims, wherein the traction surface of the second part belt (15) has for co-operation with a drive wheel (4.1) of the lift installation a coating which has a defined coefficient of friction relative to the running surface of the drive wheel (4.1), particularly a higher or lower coefficient of friction than the second material.

8. Belt (12; 22) according to any one of the preceding claims, wherein the second material comprises an elastomer, particularly polyurethane (PU), polychloroprene (CR) and/or ethylene-propylene-diene rubber (EPDM).

9. Belt (22) according to any one of the preceding claims, wherein
- at least two wedge ribs (25.1) each have a trapezium-shaped or wedge-shaped contact section (28) and a substantially rectangular base section (29),
- the rectangular base sections (29) are arranged between the contact sections (28) and the first part belt (23) and comprise at least 20% of the height of the second part belt (25) and
- the base sections (29) are completely separated from one another by intermediate spaces (26).

10. Lift installation with a lift cage (3), a drive unit (2) with a drive wheel (4.1) and a belt arrangement with at least one belt (12; 22) according to any one of claims 1 to 9.

## Revendications

1. Courroie (12 ; 22) pour une installation d'ascenseur, qui comprend :
- une première partie de courroie (13) composée d'un premier matériau, le premier matériau étant une matière thermoplastique ou contenant une matière thermoplastique, et le premier matériau présentant à température ambiante un allongement de rupture minimal selon DIN 53455 ou ISO 527 de 45 % ;
- un dispositif à supports de traction avec au moins un support de traction (14) qui est disposé dans la première partie de courroie, le support de traction (14) se composant d'un fil d'acier simple ou d'un toron de fils d'acier ou d'un câble de fils d'acier, et
- une seconde partie de courroie (15 ; 25) composée d'un second matériau, ce second matériau présentant à température ambiante une dureté de moins de 95 Shore (A), de préférence de moins de 90 Shore (A) et plus spécialement une dureté de moins de 85 Shore (A).

2. Courroie (12 ; 22) selon la revendication 1, pour laquelle le premier matériau est choisi dans l'un des groupes de matériaux suivants :
- polyamide (PA), polyéthylène (PE), polycarbonate (PC), poly(chlorure de vinyle) (PVC), ou
- polyblend qui contient l'un des matériaux mentionnés plus haut, ou
- tissu composé de l'un desdits matériaux.

3. Courroie (12 ; 22) selon la revendication 1 ou 2, pour laquelle le premier matériau présente à température ambiante un effort de tension minimal selon DIN 53455 ou ISO 527 de 45 N/mm².

4. Courroie (12 ; 22) selon l'une des revendications précédentes, pour laquelle le premier matériau présente à température ambiante une dureté à la bille minimale selon DIN 53456 ou ISO 2039 (H358/30s) de 30 N/mm², de préférence de 50 N/mm² et plus spécialement de 70 N/mm².

5. Courroie (12 ; 22) selon l'une des revendications précédentes, pour laquelle l'épaisseur de la première partie de courroie (13 ; 23) représente au maximum 60 %, de préférence au maximum 40 % et plus spécialement au maximum 30 % de l'épaisseur totale de la courroie.

6. Courroie (12 ; 22) selon l'une des revendications précédentes, pour laquelle la seconde partie de courroie (15 ; 25) présente une surface de traction qui est destinée à coopérer avec une poulie motrice de l'installation d'ascenseur et dans laquelle est formée au moins une nervure cunéiforme (15.1 ; 25.1).

7. Courroie (12 ; 22) selon l'une des revendications précédentes, pour laquelle la surface de traction de la seconde partie de courroie (15) destinée à coopérer avec une poulie motrice (4.1) de l'installation d'ascenseur présente un revêtement qui présente par rapport à la surface de roulement de la poulie motrice (4.1) un coefficient de frottement défini, en particulier un coefficient de frottement supérieur ou inférieur à celui du second matériau.

8. Courroie (12 ; 22) selon l'une des revendications précédentes, pour laquelle le second matériau comprend un élastomère, en particulier du polyuréthanne (PU), du polychloroprène (CR) et/ou du caoutchouc éthylène-propylène-diène (EPDM).

9. Courroie (22) selon l'une des revendications précédentes, pour laquelle
- au moins deux nervures cunéiformes (25.1) présentent chacune une partie de contact trapézoïdale ou cunéiforme (28) et une partie de socle (29) globalement rectangulaire,
- les parties de socle rectangulaires (29) sont disposées entre les parties de contact (28) et la première partie de courroie (23) et comprennent au moins 20 % de la hauteur de la seconde partie de courroie (25), et
- les parties de socle (29) sont entièrement séparées les unes des autres par des encartementes (26).

10. Installation d'ascenseur avec une cabine d'ascenseur (3), une unité d'entraînement (2) avec une poulie motrice (4.1) et un dispositif à courroie avec au moins une courroie (12 ; 22) selon l'une des revendications 1 à 9.
